Europäisches Patentamt

European Patent Office

Office européen des brevets

(11) Publication number: **0 147 132**
**B1**

(12) **EUROPEAN PATENT SPECIFICATION**

(45) Date of publication of patent specification: **13.06.90**

(21) Application number: **84308657.0**

(22) Date of filing: **13.12.84**

(51) Int. Cl.⁵: **B 23 K 15/00**

(54) **Electron beam welding control.**

(30) Priority: **27.12.83 US 566120**

(43) Date of publication of application:
**03.07.85 Bulletin 85/27**

(45) Publication of the grant of the patent:
**13.06.90 Bulletin 90/24**

(84) Designated Contracting States:
**AT BE CH DE FR GB IT LI LU NL SE**

(56) References cited:
**EP-A-0 097 016**
**GB-A-2 051 418**
**US-A-4 400 609**

(73) Proprietor: **THE BABCOCK & WILCOX COMPANY**
**1010 Common Street, P.O. Box 60035**
**New Orleans, Louisiana 70160 (US)**

(72) Inventor: **Domian, Henry Albert**
**2525 Crestview Avenue**
**Alliance Ohio 44601 (US)**
Inventor: **Weber, Charles Michael**
**423 Cobblestone Avenue**
**Alliance Ohio 44601 (US)**

(74) Representative: **Cotter, Ivan John et al**
**D. YOUNG & CO. 10 Staple Inn**
**London WC1V 7RD (GB)**

EP 0 147 132 B1

# Description

This invention relates to apparatus for maintaining the point of impact of an electron beam in an intended weld line between two weldments.

The electron beam of an electron beam welder must be positioned with precision in the area of the weld line between weldments if advantage is to be taken of the electron beam. Such precision is not difficult to obtain if the weld line has a simple geometric shape; however, it becomes difficult to obtain if the weld line between weldments is irregular or if the weld line is not known with precision.

Several systems have been devised to maintain the electron beam in the intended weld line. A typical one, for example, is illustrated and described in US Patent No. US—A—3 743 776, wherein back scattering of the electrons on opposite sides of the beam is used to maintain the electron beam in the intended weld line.

Another system, disclosed in US Patent No. US—A—4 400 609 provides apparatus for maintaining the point of impact of an electon beam in an intended weld line between two weldments, the apparatus comprising first means for generating a first primary output signal predominantly of a specific wavelength and proportional in magnitude to the radiation generated by the electron beam and impinging on one side of the weld line, second means for generating a second primary output signal predominantly of a specific wavelength and proportional in magnitude to the radiation generated by the electron beam and impinging on the other side of the weld line, a difference unit responsive to the primary output signals to generate an output signal representative of the difference between the primary output signals, and control means responsive to the difference signal to control the transverse positioning of the electron beam to maintain the point of impact of the electron beam in the intended weld line between the two weldments.

According to this invention, there is provided apparatus as described above, characterised in that each of the first and second means includes a band of material affixed to a weldment and tracking the intended weld line so as to be exposed to the total radiation generated by the electron beam, each band being such as to emit radiation predominantly of a specific wavelength, and wherein the two bands of material are such as to emit radiation predominantly of different specific wavelengths.

The invention will now be further described, by way of illustrative example, with reference to the accompanying drawings, in which like references designate like or corresponding parts throughout, and in which:

Figure 1 is a schematic view illustrating the principles of operation of apparatus embodying this invention;

Figure 2 is an elementary one-line logic diagram of electrical circuits of the apparatus for deriving desired output signal; and

Figure 3 is a fragmentary view of a modification of the apparatus illustrated in Figure 1.

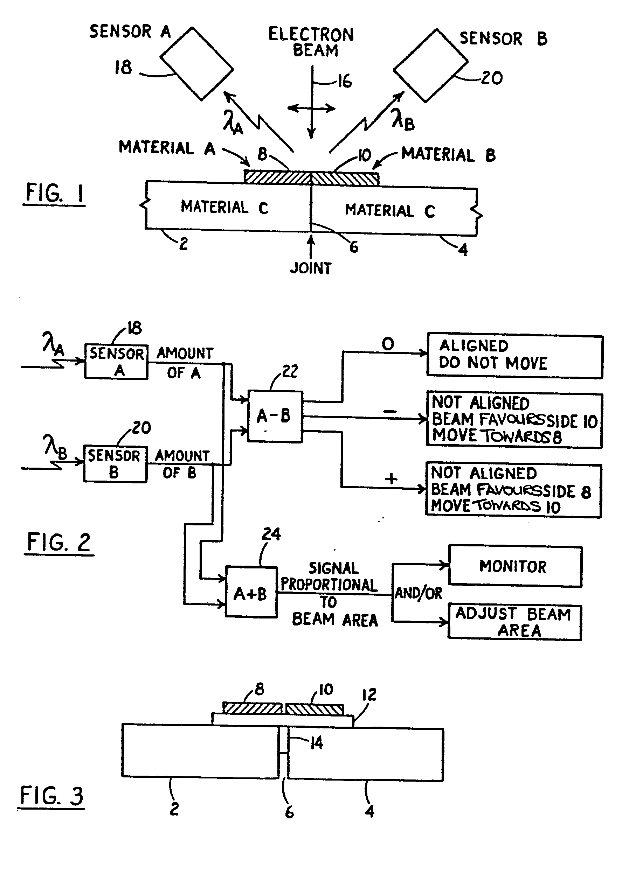

Figure 1 of the drawings shows weldments 2 and 4 which are to be welded together along a joint of weld line 6. A strip of material 8 tracking one side of the weld line 6 is attached to the surface of the weldment 2 and a strip of material 10 tracking the opposite side of the weld line 6 is attached to the surface of the weldment 4. The materials 8 and 10 may be attached to the weldments 2 and 4, depending on the type of material, by painting, vapour deposition, plasma spraying, or by mechanically clamping to the weldments. Figure 3 illustrates a modification wherein the materials 8 and 10 are attached to a plate 12 having a depending shim 14 which is inserted into the weld line 6.

The materials 8 and 10 can be any of a class of materials of metallurgical compatability with the weldments 2 and 4 and emitting radiation predominantly of a specific wavelength when exposed to irradiation by an electron beam 16. The materials 8 and 10 predominantly emit radiation of different specific wavelengths.

A sensor 18 ("sensor A") and a sensor 20 ("sensor B") are carried by a conventional mechanism (not shown) for positioning the electron beam transversely of and longitudinally along the weld line 6. The sensor 18 generates a first primary output signal proportional in magnitude to the radiation emitted from the material 8. The sensor 20 generates a second primary ouput signal proportional in magnitude to the radiation emitted by the material 10.

As schematically shown in Figure 2, the primary output signal from the sensor 20 (sensor B) is subtracted from the primary output signal from the sensor 18 (sensor A) in a difference unit 22 to generate an output signal which has (i) a null or zero value when the radiation emitted from the materials 8 and 10 are equal, (ii) a negative value when the radiation emitted from the material 10 is greater than the radiation emitted from the material 8 and, (iii) a positive value when the radiation emitted by the material 8 is greater than the radiation emitted by the material 10. In a manner which will be within the knowledge of those familiar with the art, there amy be provided circuitry and mechanisms (not shown) responsive to the output signal from the differnece unit 22 to transversely position the electron beam 16 as it is longitudinally moved along the weldments to thereby maintain the output signal at a null or zero value when the electron beam is in alignment with the weld line. Such circuitry and mechanisms are indicated schematically in Figure 2 by blocks identifying their function.

Also, as shown schematically in Figure 2, the primary output signals from the sensors 18 and 20 may be added in a summing unit 24 to produce an output signal proportional to beam area (more specifically the area of the radiation generated by the electron beam 16 impinging on both sides of the weld line 6) and available for monitoring and/ or control purposes, again as indicated schematically in Figure 2 by blocks identifying functions. For example, a predetermined beam area may be maintained, or the beam area may be otherwise controlled or monitored.

## Claims

1. Apparatus for maintaing the point of impact of an electron beam (16) in an intended weld line (6) between two weldments (2, 4), the apparatus comprising first means (8, 18) for generating a first primary output signal predominantly of a specific wavelength ($\lambda_A$) and proportional in magnitude to the radiation generated by the electron beam (16) and impinging on one side of the weld line (6), second means (10, 20) for generating a second primary output signal predominantly of a specific wavelength ($\lambda_B$) and proportional in magnitude to the radiation generated by the electron beam (16) and impinging on the other side of the weld line (6), a difference unit (22) responsive to the primary output signals to generate an output signal respesentative of the difference between the primary output signals, and control means responsive to the difference signal to control the transverse positioning of the electron beam to maintin the point of impact of the electron beam (16) in the intended weld line (6) between the two weldments (2, 4), characterised in that each of the first and second means includes a band of material (8, 10) affixed to a weldment (2, 4) and tracking the intended weld line (6) so as to be exposed to the total radiation generated by the electron beam (16), each band (8, 10) being such as to emit radiation predominantly of a specific wavelength, and wherein the two bands of material (8, 10) are such as to emit radiation predominantly of different specific wavelengths ($\lambda_A$, $\lambda_B$).

2. Apparatus according to claim 1, wherein each band of material (8, 10) is affixed to the respective weldment (2, 4) via a plate (12) having a depending shim (14) for insertion in the weld line (6) between the weldments (2, 4).

3. Apparatus according to claim 1 or claim 2, including a summing unit (24) responsive to the primary output signals to generate an output signal for minitoring the area of the radiation generated by the electron beam (16) impinging on both sides of the weld line (6).

## Patentansprüche

1. Vorrichtung zum Festhalten des Auftreffpunktes eines Elektonenstrahles (16) auf einer vorgesehenen Schweißlinie (6) zwischen zwei Schweißkonstruktionen (2, 4), wobei die Vorrichtung aufweist: eine erste Einrichtung (8, 18) zum Erzeugen eines ersten Hauptausgangssignales, welches vorherrschend aus einer spezifischen Wellenlänge ($\lambda_A$) besteht und in seiner Stärke der von der Elektronenstrahl (16) erzeugten Strahlung proportional ist und auf einer Seite der Schweißlinie (6) auftrifft, eine zweite Einrichtung (10, 20) zum Erzeugen eines zweiten Hauptausgangssignales, welches vorherrschend aus einer spezifischen Wellenlänge ($\lambda_B$) besteht und in seiner Stärke proportional zu der von dem Elektronenstrahl (16) erzeugten Strahlung ist und auf der anderen Seite der Schweißlinie (6) auftrifft, eine Differenzeinheit (22), welche auf die Hauptausganssignale anspricht, um ein Ausgangssignal zu erzeugen, welches dem Unterschied zwischen den Hauptausgangssignalen entspricht, und eine Kontrolleinrichtung, welche auf das Differenzsignal anspricht, um die Querpositionierung des Elektronenstrahles zu steuern, um den Auftreffpunkt des Elektronenstrahls (16) auf der Sollschweißlinie (6) zwischen den beiden Schweißkonstruktionen (2, 4) zu halten, dadurch gekennzeichnet, daß beide, sowohl die erste als auch die zweite Einrichtung ein Materialband (8, 10) aufweisen, welches an der Schweißkonstruktion (2, 4) befestigt ist und der Spur der Sollschweißlinie (6) folgt, so daß sie der Gesamtstrahlung, die von dem Elektronenstrahl (16) erzeugt wird, ausgesetzt ist, wobei jedes Band (8, 10) von der Art ist, daß es Strahlung vorherrschend in einer spezifischen Wellenlänge aussendet, und wobei die beiden Materialbänder (8, 10) der Art sind, daß sie Strahlung vorherrschend in verschiedenen spezifischen Wellenlängen ($\lambda_A$, $\lambda_B$) aussenden.

2. Vorrichtung nach Anspruch 1, wobei jedes Materialband (8, 10) an der entsprechenden Schweißkonstruktion (2, 4) über eine Platte (12) befestigt ist, welche eine herabhängende Beilage (14) für das Einsetzen in die Schweißlinie (6) zwischen den Schweißkonstruktionen (2, 4) hat.

3. Vorrichtung nach Anspruch 1 oder 2, einschließlich einer Summiereinheit (24), welche auf die Hauptausgangssignale anspricht, um ein Ausgangssignal zu erzeugen für das Überwachen des Strahlungsbereiches, welcher von dem Elektronenstrahl (16) erzeugt wird, der auf beiden Seiten der Schweißlinie (6) auftrifft.

## Revendications

1. Dispositif pour maintenir le point d'impact d'un faisceau d'électrons (16) dans une ligne de soudure prévue (6) entre deux constructions soudées (2, 4), le dispositif comprenant un premier moyen (8, 18) pour caractéristique essentielle une longueur d'onde spécifique ($\lambda_A$) et étant proportionnel en amplitude au rayonnement produit par le faisceau d'électrons (16) et incident à un côte de la ligne de soudure (6), un second moyen (10, 20) pour produire un second signal primaire en sortie ayant pour caractéristique essentielle une longueur d'onde spécifique ($\lambda_B$) et étant proportionnel en amplitude au rayonnement produit par le faisceau d'électrons (16) et incident à l'autre côté de la ligne de soudure (6), une unité de différence (22) sensible aux signaux primaires en sortie pour produire un signal en sortie représentatif de la différence entre les signaux primaires en sortie et un moyen de commande sensible au signal de différence pour commander le positionnement transversal du faisceau d'électrons afin de maintenir le point d'impact du faisceau d'électrons (16) dans la ligne de soudure prévue (6) entre les deux constructions soudées (2, 4) caractérisé en ce que chacun des premier et second moyens comprend une bande de matériau (8, 10) fixée à une construction soudée (2, 4) et suivant la ligne de soudure prévue (6) de façon à être exposée au rayonnement total produit par le faisceau d'électrons (16), chaque bande (8, 10) étant telle à émettre un rayonnement ayant pour caractéristique essentielle une longueur d'onde spécifique, et dans lequel les deux bandes de matériau (8, 10) sont telles à émettre un rayonnement ayant pour caractéristique essentielle des longueurs d'onde spécifiques différentes ($\lambda_A$, $\lambda_B$).

2. Dispositif selon la revendication 1, dans lequel chaque bande de matériau (8, 10) est fixée à la construction soudée respective (2, 4) via une plaque (12) comportant une cale d'épaisseur (14) dépendante pour insertion dans la ligne de soudure (6) entre les constructions soudées (2, 4).

3. Dispositif selon la revendication 1 ou 2, comprenant une unité de sommation (24) sensible aux signaux primaires en sortie pour produire un signal en sortie destiné à surveiller la zone de rayonnement produite par de faisceau d'électrons (16) incident aux deux côtés de la ligne de soudure (6).

SENSOR A

ELECTRON
BEAM

SENSOR B

18

20

$\lambda_A$

16

$\lambda_B$

MATERIAL A

8

10

MATERIAL B

FIG. 1

MATERIAL C

MATERIAL C

2

6

4

JOINT

$\lambda_A$

18

SENSOR
A

AMOUNT
OF A

O

ALIGNED
DO NOT MOVE

22

A-B

−

NOT ALIGNED
BEAM FAVOURS SIDE 10
MOVE TOWARDS 8

$\lambda_B$

20

SENSOR
B

AMOUNT
OF B

+

NOT ALIGNED
BEAM FAVOURS SIDE 8
MOVE TOWARDS 10

FIG. 2

24

A+B

SIGNAL
PROPORTIONAL
TO
BEAM AREA

AND/OR

MONITOR

ADJUST BEAM
AREA

8

10

12

14

FIG. 3

2

6

4